Europäisches Patentamt

European Patent Office

Office européen des brevets

(19)

(11) Publication number: **0 144 211 B1**

## EUROPEAN PATENT SPECIFICATION

(12)

(45) Date of publication of patent specification: **27.02.91**   (51) Int. Cl.⁵: **G01M 3/18, G08B 23/00**

(21) Application number: **84308260.3**

(22) Date of filing: **28.11.84**

(54) Sensor cable.

(30) Priority: **30.11.83 US 556740**
**01.12.83 US 556829**

(43) Date of publication of application:
**12.06.85 Bulletin 85/24**

(45) Publication of the grant of the patent:
**27.02.91 Bulletin 91/09**

(84) Designated Contracting States:
**AT BE CH DE FR GB IT LI NL SE**

(56) References cited:
**EP-A-01 132 39**
**DE-A- 2 331 983**
**DE-A- 2 802 084**
**DE-A- 3 140 804**
**GB-A- 2 091 880**

**PATENTS ABSTRACTS OF JAPAN, vol. 5, no. 52 (P-56) [724], 11th April 1981; & JP - A - 56 6133 (HITACHI DENSEN K.K.) 22-01-1981**

(73) Proprietor: **RAYCHEM CORPORATION (a Delaware corporation)**
**300 Constitution Drive**
**Menlo Park, California 94025(US)**

(72) Inventor: **Wasley, Robert S.**
**407 Hillway Drive**
**Redwood City California 94062(US)**

(74) Representative: Benson, **John Everett et al**
**Raychem Limited Intellectual Property Law Department Faraday Road Dorcan Swindon, Wiltshire SN3 5HH(GB)**

EP 0 144 211 B1

## Description

This invention relates to cables which are useful in methods and apparatus for detecting and obtaining information about changes in variables.

Introduction to the Invention

A number of methods have been used (or proposed for use) to detect changes in variables along an elongate path, eg, the occurrence of a leak (of water or another liquid or gas), insufficient or excessive pressure, too high or too low a temperature, the presence or absence of light or another form of electromagnetic radiation. Changes of this kind are referred to in this specification by the generic term "event". Reference may be made for example to US Patents Nos. 1,084,910, 2,581,213, 3,248,646, 3,384,493, 3,800,216, and 3,991,413, UK Patent No. 1,481,850 and German Offenlegungschriften Nos. 3,001,150.0 and 3,225,742.

EP-A-0133748 (the application corresponding to United States Applications Serial Nos. 509,897 and 599,047) describes an improved method and apparatus for monitoring for the occurrence of an event. and for detecting and obtaining information about the event upon its occurrence (ie, as soon as it occurs or at some time after it has occurred). In that method. upon occurrence of the event, electrical connection is made between a source member and a locating member of known impedance characteristics. the connection being effective at a first point at which the event takes place (or whose location is defined by some other characteristic of the event). A current of known size is then driven through the electrical connection and down the locating member to a second point whose location is known. The voltage drop between the first and second points is then measured and the location of the first point can then be determined. The system preferably makes use of a locating member having an impedance which is selected to give a desired degree of accuracy in locating the first point, and which preferably does not vary substantially within the temperature range in which the system operates. For many uses, a particularly important advantage is that the information obtained can be independent of the impedance of the connection to the locating member, ie, the information obtained remains the same even if a substantial and unknown change is made in the impedance of the connection.

EP-A-0133748 (United States Patent Application Serial No. 599,048, which is a continuation-in-part of Serial No. 509,897) also describes a similar system, in that (a) the source member is connected to the locating member, so that current can pass through the locating member in the absence of an event, and, (b) upon occurrence of the event, electrical connection is made between the locating member and the return member. Thus the similar system employs a novel method for monitoring for the occurrence of an event, and for detecting and obtaining information about the event upon its occurrence, which method comprises providing a system in which, upon occurrence of the event,

(1) electrical connection is made between an electrically conductive locating member and an electrically conductive return member;
    the connection to the locating member being effective at a first point whose location is defined by at least one characteristic of the event;
    the making of the connection enabling the formation of a test circuit which comprises (a) the connection, (b) that part of the locating member which lies between the first point and a second point having a known location on the locating member, and (c) a voltage-measuring device which has an impedance which is very high by comparison with any unknown part of the impedance of the other components of the test circuit:
(2) there is provided a reference circuit which comprises
    (a) a source member which is electrically connected to the second point on the locating member and to a point on the locating member whose distance from the second point is at least as great as the distance from the second point to the first point. both distances being measured along the locating member. and which is otherwise electrically insulated from the locating member.
    (b) that part of the locating member which lies between the first and second points. and
    (c) a power source which causes an electrical current of known size to be transmitted between the first and second points on the locating member. the current and the locating member being such that, by measuring the voltage drop between the first and second points. the spatial relationship between the first and second points can be determined:
(3) the voltage-measuring device is used to measure the voltage drop between the first and second points: and
(4) information concerning the event is obtained from the measurement made in step (3).

Patent Abstracts of Japan. volume 5. No. 52 page 56 (724). and JP-A-56-6133 disclose an oil-leakage position-detecting cable formed from two non-steel conductors each having an oil-soluble insulating layer thereon and a steel conductor having an oil-insoluble insulating layer thereon, the non-steel conductors being twisted around the steel conductor.

DE-AI-3140804 discloses a fluid-detection arrangement comprising a flexible pipe having a corrugated metal inner component and a plastics casing separated therefrom by an anti-corrosive layer. An insulated metal signal conductor whose insulation is unstable in the presence of petrochemical fluids lies between the inner component and the casing of the pipe, and the conductor may be a twisted pair.

I have now discovered an improved apparatus which is particularly adapted for use in the methods described in EP-A-0133748, but which can also be used in other methods.

In accordance with the present invention, there is provided a sensor cable for detecting and locating the presence of an electrolyte, the cable comprising first, second and third elongate wrapped electrical connection means, each of which has a near end and a far end, characterised in that

(1) the first elongate electrical connection means comprises an elongate metal core which is electrically surrounded by a jacket of a conductive polymer;

(2) the second electrical connection means

(i) comprises an elongate metal core which is electrically surrounded by a jacket of a conductive polymer,

(ii) has an impedance, from its near end to each point thereon, that is characteristic of its length from its near end to that point, and

(iii) is electrically insulated from the first connection means in the absence of an electrolyte and, in the presence of an electrolyte, becomes electrically connected to the first connection means at at least one connection point whose distance from the near end of the second connection means is characteristic of the location of the point or points at which the electrolyte exists; and

(3) the third electrical connection means is electrically insulated from said first and second electrical connection means (a) from its near end to its far end in the absence of an electrolyte and (b) at least from its near end to the conection point in the presence of an electrolyte;

and wherein at least one of said first, second and third connection means is wrapped around at least one of the other connection means or around an elongate core member.

Assembly of at least some of the elongate connection means in a wrapped, preferably, braided, configuration, results in substantial advantages, including in particular:

(a) the ability to produce, from a limited inventory of starting materials, a range of cables of very different properties, in particular of different resolutions (which depends on the impedance per unit length of cable of the second connection means) and of different sensitivities (when this depends on the physical separation of the first and second connection means) by changes in easily adjusted manufacturing variables, eg, the pitch of the wrapping, the separation of the wrapped components, and the means used to separate the wrapped components;

(b) the ability to produce a cable having different properties along its length by changes in easily adjusted manufacturing variables, eg, the pitch of the wrapping;

(c) the ability to incorporate into the cable additional elongate electrical elements which can be used, for example, for continuity testing or ground fault detection;

(d) the ability to incorporate a further first electrical connection means, and or a further second electrical connection means, so that the cable will detect changes in more than one variable;

(e) the ability to manufacture a cable having a circular cross-section, so that it is compliant in all planes and is equally sensitive in all planes to the change(s) to be detected; and

(f) substantial manufacturing economies by comparison with extrusion processes.

## BRIEF DESCRIPTION OF THE DRAWING

The invention is illustrated in the accompanying drawing, in which

Figures 1, 2, 3 and 4 are cross-sections through different embodiments of the invention, and

Figure 5 is a circuit diagram showing the method of the invention

## DETAILED DESCRIPTION OF THE INVENTION

At least one, and preferably at least two, of the first, second and third connection means has a wrapped configuration. A particularly useful arrangement is for the first and second connection means to be wrapped around the third connection means, which is preferably an insulated wire. The wrapping is preferably a spiral wrap of constant pitch, but other types of wrap can be used, and the pitch can vary along the length of the cable. Wrapping is preferably effected by means of a braiding machine.

When more than one of the connection means has a wrapped configuration, the wrapped connection means are preferably parallel to each other, ie, are wrapped in the same way and at the same pitch; they can be spaced apart from each other by a jacket composed of an insulating material (which may be apertured to permit an electrolyte to contact the connection means) on one or both of the connection means and or by an insulating spacer which is wrapped at the same time.

Alternatively, the wrapped connection means can have different wrapped configurations so that they cross at spaced-apart locations. This can be achieved by wrapping one clockwise and the other anti-clockwise, at the same time or different pitches, or by wrapping both in the same direction at different pitches. In this alternative, a preferred embodiment employs first and second connection means which are separated from each other at crossing points by a separator which is an electrical insulator in the absence of an electrolyte and which effects or permits electrical connection between the first and second connection means in the presence of an electrolyte; thus the separator (which can be in the form of a jacket on one or both of the first and second connection means) can be composed of a material which becomes conductive, or which softens and flows to allow direct contact between first and second connection means which have been wrapped so that they are pressed into contact.

As briefly noted above, the new cable can comprise one or more first connection means and one or more second connection means. These connection means, and the means used to keep the first and second connection means insulated from each other under normal conditions, can be chosen so that the cable will detect changes in more than one variable. In addition, the cable can comprise additional elongate members which may be present simply to provide additional strength or which can be electrically conductive so that they can be used as part of a conventional system for detecting changes, e.g. for continuity testing and ground fault detection.

When the cable includes one or more electrical connection means in addition to the first, second and third connection means (including a further first connection means and or a further second connection means, or an additional connection means for some other function, e g continuity testing), this additional means preferably also has a wrapped configuration, which may be parallel to one or more of the first, second and third connection means or can have an opposite hand or different pitch so that it crosses one or more of the first, second and third connection means at spaced-apart points.

As discussed in detail in the applications referred to above, it is important that the impedance of the second connection means should, under the conditions of the method, change in a known way along the length of the cable. To ensure that variations in ambient temperature do not lead to unacceptable margins of error in the location of the change of the variable from the first to the second state, it is preferred that the second electrical connection means has a temperature coefficient of impedance which is less than 0.003 per degree Centigrade over at least one 25°C temperature range between -100°C and +500°C., and preferably over the temperature range 0 to 100°C.

The new cable can be provided with an overbraid of insulating material if desired.

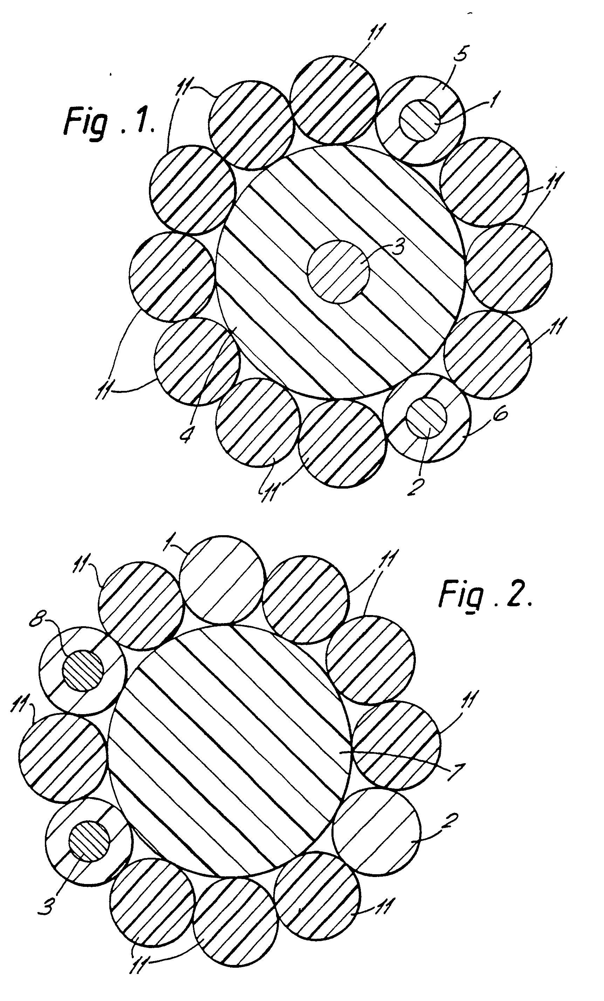

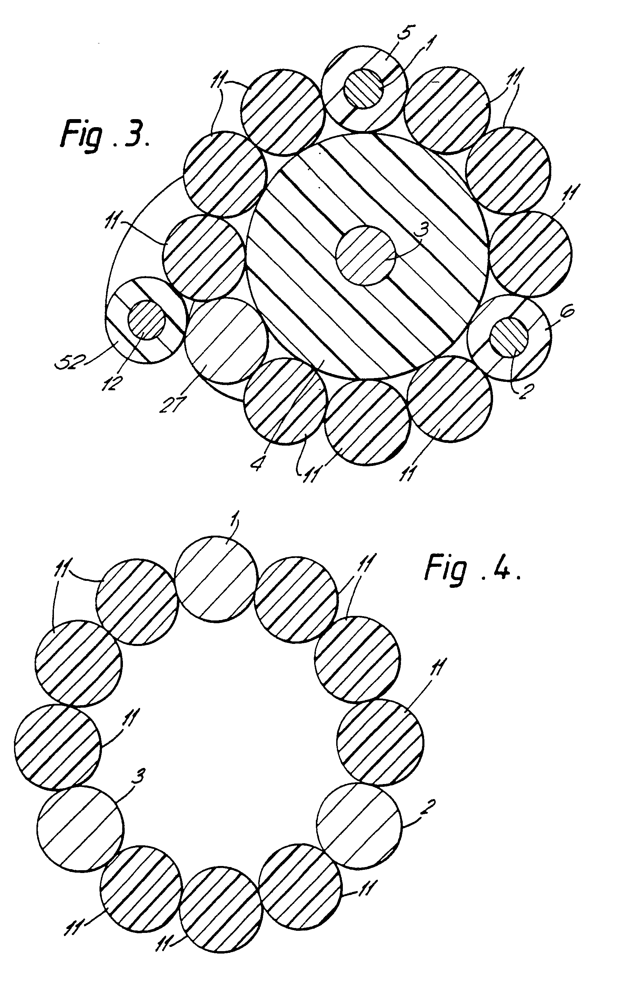

Referring now to the drawings, Figures 1-4 show diagrammatic cross-sections through apparatus of the invention. It should be noted in particular that in practice, the distance between the center of the cable and the various elongate elements will not be constant as shown in the drawings, but will change as the elements interlace with each other, and that the various cross-over points between the elongate elements are not shown in the drawings, except in Figure 3, which shows an embodiment in which the interaction between the first and second connection means at the cross-over point is significant. In Figure 1, the first connection means comprises a metal, e.g. copper, core 1 surrounded by a conductive polymer jacket 5, and the second connection means comprises a core 2 of a metal whose resistivity is substantially invariant with temperature, e.g. Copel (TRADEMARK), surrounded by a conductive polymer jacket 6. The first and second connection means, together with elongate insulating members 11, are formed into a braid around an insulating jacket 4 which surrounds the third connection means 3 of a metal, e.g. copper. The first and second connection means are parallel to each other.

In Figure 2, the first and second connection means are bare wires 1 and 2, e.g of copper and Copel (TRADEMARK). The first, second and third connection means, together with insulating members 11, and an additional insulated wire 8 (e g for continuity testing), are formed into a braid around an insulating core 7, with the first and second connection means parallel to each other.

Figure 3 is similar to Figure 1, but also comprises a further first connection means and a further second connection means, one running clockwise and the other anti-clockwise. The further first connection means comprises a metal core 12 surrounded by a jacket 52 of a material which is an insulator in the absence of an electrolyte but which will dissolve or otherwise be removed in the presence of an electrolyte. The further second connection means 7 is a bare wire composed of a metal whose resistivity is substantially invariant with temperature. Thus the apparatus of Figure 3 will detect and locate either of two different events, one causing connection between the conductors 1 and 2, and the other causing connection between conductors 12 and 27.

Figure 4 is similar to Figure 2, except that there is no insulating core 7 and the third connection means is a bare wire (which must, therefore, run parallel to the first and second connection means).

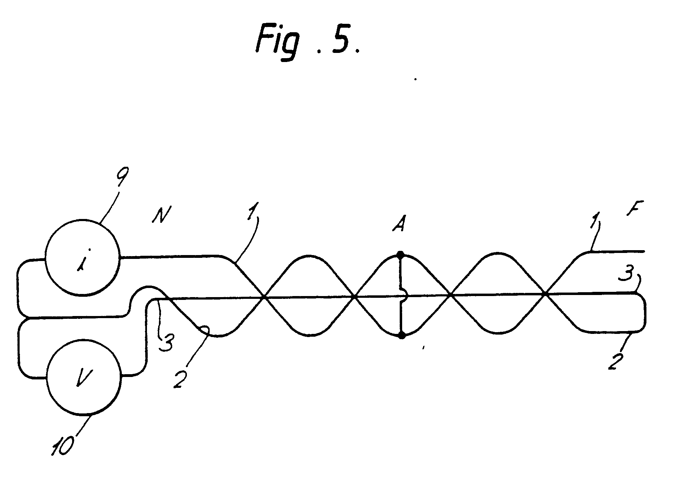

Figure 5 is a circuit diagram showing a method of the invention. The conductors 1, 2 and 3 are provided with a wrapped configuration as they proceed along a path from a near end N to a far end F. The second conductor has a rsistance per unit length which is substantially constant under the conditions of the method. A controlled current source 9 is connected between the near ends of the first and second conductors; a very high input resistance voltmeter 10 is connected between the near ends of the second and third conductors; and the far ends of the second and third conductors are connected to each other; these connections are of very low resistance by comparison with the other components. So long as the compliance voltage of the controlled current source is not large enough to cause any current to flow between the first and second conductors, the voltmeter does not measure any voltage. However, if the first and second conductors are connected as shown at point A in Figure 4, a controlled current flows in the test circuit thus created; and since the resistance of the voltmeter is very much higher than the combined resistances of the third conductor and the second conductor between points A and F, the voltage measured by the voltmeter is proportional to the distance between points A and N. If the connection at A results from the occurrence of a fault condition, the location of the fault can therefore be calculated.

## Claims

1. A sensor cable for detecting and locating the presence of an electrolyte, the cable comprising first, second and third elongate wrapped electrical connection means, each of which has a near end and a far end characterised in that
   (1) the first elongate electrical connection means (1,5) comprises an elongate metal core (1) which is electrically surrounded by a jacket (5) of a conductive polymer;
   (2) the second electrical connection means (2,6)
      (i) comprises an elongate metal core (2) which is electrically surrounded by a jacket (6) of a conductive polymer,
      (ii) has an impedance, from its near end to each point thereon, that is characteristic of its length from its near end to that point, and
      (iii) is electrically insulated from the first connection means (1,5) in the absence of an electrolyte and, in the presence of an electrolyte, becomes electrically connected to the first connection means (1,5) at at least one connection point whose distance from the near end of the second connection means (2,6) is characteristic of the location of the point or points at which the electrolyte exists; and
   (3) the third electrical connection means (3) is electrically insulated from said first (1,5) and second (2,6) electrical connection means (a) from its near end to its far end in the absence of an electrolyte and (b) at least from its near end to the connection point in the presence of an electrolyte; and wherein at least one of said first (1,5), second (2,6) and third (3) connection means is wrapped around at least one of the other connection means or around an elongate core member (7).

2. A sensor cable according to claim 1 wherein the third electrical connection means (3) is surrounded by electrical insulation (4), and the first (1,5) and the second (2,6) connection means are wrapped around the third connection means (3) and the electrical insulation (4) thereof.

3. A sensor cable according to claim 1 or 2 wherein at least one of said first (1,5), second (2,6), and third (3) connection means forms part of a braid.

4. A sensor cable according to claim 1 2 or 3 wherein the first (1,5) and second (2,6) connection means are wrapped parallel to each other

5. A sensor cable according to any one of the preceding claims wherein the first (1,5) and second (2,6) electrical connection means are separated from each other by a member (M) which is an electrical insulator in the absence of an electrolyte, and which connects the first (1,5) and second (2,6) electrical connection means in the presence of an electrolyte

6. A sensor cable according to claim 1, 2 or 3 wherein the first (1,5) and second (2,6) electrical connection means have different wrapped configurations such that they cross at spaced-apart locations.

7. A sensor cable according to any one of the preceding claims wherein the second electrical connection means (2,6) has a temperature coefficient of impedance which is less than 0.003 per degree Centigrade over at least one 25°C temperature range between -100°C and +500° C.

8. A sensor cable according to claim 7 wherein the second electrical connection means (2,6) has a temperature coefficient of resistance of less than 0.003 per degree Centigrade over the temperature range 0° C to 100° C.

9. A sensor cable according to any one or the preceding claims, comprising at least one further first and/or second electrical connection means (12,52).

**Revendications**

1. Câble détecteur pour la détection et la localisation de la présence d'un électrolyte, le câble comprenant des premier, deuxième et troisième moyens enroulés allongés de connexion électrique, chacun de ces moyens ayant une extrémité proximale et une extrémité distale, caractérisé en ce que

   (1) le premier moyen allongé de connexion électrique (1,5) comprend une âme métallique allongée (1) qui est entourée électriquement par une enveloppe (5) d'un polymère conducteur ;

   (2) le deuxième moyen de connexion électrique (2,6)

      (i) comprend une âme métallique allongée (2) qui est entourée électriquement par une enveloppe (6) d'un polymère conducteur,

      (ii) possède une impédance, de son extrémité proximale à chacun de ses points, qui est caractéristique de sa longueur depuis son extrémité proximale jusqu'à ce point ; et

      (iii) est électriquement isolé du premier moyen de connexion (1.5) en l'absence d'un électrolyte et, en présence d'un électrolyte, devient connecté électriquement au premier moyen de connexion (1.5) a au moins un point de connexion dont la distance de l'extrémité proximale du deuxième moyen de connexion (2,6) est caractéristique de l'emplacement du ou des points au niveau desquels se trouve l'électrolyte ; et

   (3) le troisième moyen de connexion électrique (3) est isolé électriquement desdits premier (1.5) et deuxième (2.6) moyens de connexion électrique (a) de son extrémité proximale a son extrémité distale en l'absence d'un électrolyte et (b) au moins de son extrémité proximale au point de connexion en présence d'un électrolyte. au moins l'un desdits premier (1,5), deuxième (2,6) et troisième (3) moyens de connexion étant enroulé autour d'au moins l'un des autres moyens de connexion ou bien autour d'une âme allongée (7).

2. Câble détecteur suivant la revendication 1, dans lequel le troisième moyen de connexion électrique (3) est entouré d'un isolant électrique (4), et les premier (1,5) et deuxième (2,6) moyens de connexion sont enroulés autour du troisième moyen de connexion (3) et de son isolant électrique (4).

3. Câble détecteur suivant la revendication 1 ou 2, dans lequel au moins l'un des premier (1,5), deuxième (2,6) et troisième (3) moyens de connexion fait partie d'une tresse.

4. Câble détecteur suivant la revendication 1, 2 ou 3, dans lequel les premier (1,5) et deuxième (2,6) moyens de connexion sont enroulés parallèlement les uns aux autres.

5. Câble détecteur suivant l'une quelconque des revendications précédentes, dans lequel les premier (1,5) et deuxième (2,6) moyens de connexion électrique sont séparés l'un de l'autre par un élément (11) qui est un isolant électrique en l'absence d'un électrolyte. et qui connecte les premier (1,5) et second (2,6) moyens de connexion électrique en présence d'un électrolyte.

6. Câble détecteur suivant la revendication 1. 2 ou 3. dans lequel les premier (1,5) et second (2,6) moyens de connexion électrique possèdent des configurations enroulées différentes de sorte qu'ils se croisent à des emplacements espacés.

7. Câble détecteur suivant l'une quelconque des revendications précédentes, dans lequel le deuxième moyen de connexion électrique (2,6) possède un coefficient de température d'impédance qui est inférieur à 0,003 par degré centigrade dans une plage de températures d'au moins 25° C entre -100° C et +500° C.

8. Câble détecteur suivant la revendication 7, dans lequel le deuxième moyen de connexion électrique (2,6) possède un coefficient de température d'impédance inférieur a 0,003 par degré centigrade dans la plage de températures de 0° C à 100° C.

9. Câble détecteur suivant l'une quelconque des revendications précédentes, comprenant au moins un autre premier et/ou deuxième moyens de connexion électrique (12,52).

## Ansprüche

1. Sensorkabel zum Erfassen und Lokalisieren der Anwesenheit eines Elektrolyten, wobei das Kabel erste, zweite und dritte langgestreckte gewickelte elektrische Verbindungseinrichtungen umfaßt, die jeweils ein nahes und ein fernes Ende aufweisen, dadurch gekennzeichnet, daß
   (1) die erste langgestreckte elektrische Verbindungseinrichtung (1, 5) einen langgestreckten Metallkern (1) umfaßt, der von einem Mantel (5) aus einem leitfähigen Polymeren elektrisch umgeben ist;
   (2) die zweite elektrische Verbindungseinrichtung (2, 6)
      (i) einen langgestreckten Metallkern (2) umfaßt, der von einem Mantel (6) aus einem leitfähigen Polymeren elektrisch umgeben ist;
      (ii) von ihrem nahen Ende zu jedem darauf befindlichen Punkt eine Impedanz hat, die für ihre Länge von ihrem nahen Ende bis zu diesem Punkt charakteristisch ist, und
      (iii) bei Abwesenheit eines Elektrolyten von der ersten Verbindungseinrichtung (1, 5) elektrisch isoliert ist und bei Anwesenheit eines Elektrolyten mit der ersten Verbindungseinrichtung (1, 5) an wenigstens einem Verbindungspunkt elektrisch verbunden wird, dessen Abstand von dem nahen Ende der zweiten Verbindungseinrichtung (2, 6) für die Lage des Punkts oder der Punkte, an denen der Elektrolyt vorhanden ist, charakteristisch ist, und
   (3) die dritte elektrische Verbindungseinrichtung (3) von der ersten (1, 5) und der zweiten (2, 6) elektrischen Verbindungseinrichtung (a) bei Abwesenheit eines Elektrolyten von ihrem nahen Ende bis zu ihrem fernen Ende und (b) bei Anwesenheit eines Elektrolyten wenigstens von ihrem nahen Ende bis zu dem Verbindungspunkt elektrisch isoliert ist; und wobei wenigstens eine der ersten (1, 5), zweiten (2, 6) und dritten (3) Verbindungseinrichtungen um wenigstens eine der jeweils anderen Verbindungseinrichtungen oder um einen langgestreckten Kern (7) gewickelt ist.

2. Sensorkabel nach Anspruch 1, wobei die dritte elektrische Verbindungseinrichtung (3) von elektrischer Isolierung (4) umgeben ist, und die erste (1, 5) und die zweite (2, 6) Verbindungseinrichtung um die dritte Verbindungseinrichtung (3) und deren elektrische Isolierung (4) gewickelt sind.

3. Sensorkabel nach Anspruch 1 oder 2, wobei wenigstens eine der ersten (1, 5) 1 zweiten (2, 6) und dritten (3) Verbindungseinrichtungen Teil einer Umflechtung bildet.

4. Sensorkabel nach Anspruch 1, 2 oder 3, wobei die erste (1, 5) und die zweite (2, 6) Verbindungseinrichtung parallel zu einander gewickelt sind.

5. Sensorkabel nach einem der vorhergehenden Ansprüche, wobei die erste (1, 5) und die zweite (2, 6) elektrische Verbindungseinrichtung durch einen Teil (11) voneinander getrennt sind, der bei Abwesenheit eines Elektrolyten ein elektrischer Isolator ist und bei Anwesenheit eines Elektrolyten die erste (1, 5) und die zweite (2, 6) elektrische Verbindungseinrichtung miteinander verbindet.

6. Sensorkabel nach Anspruch 1, 2 oder 3, wobei die erste (1, 5) und die zweite (2, 6) elektrische Verbindungseinrichtung unterschiedliche Wickelkonfigurationen haben, so daß sie einander an beabstandeten Stellen kreuzen

7. Sensorkabel nach einem der vorhergehenden Ansprüche, wobei die zweite elektrische Verbindungseinrichtung (2, 6) einen Temperaturbeiwert der Impedanz hat, der über wenigstens einen 25 °C-Temperaturbereich zwischen -100 °C und +500 °C kleiner als 0.003 °C ist

8. Sensorkabel nach Anspruch 7, wobei die zweite elektrische Verbindungseinrichtung (2, 6) einen Temperaturbeiwert des Widerstands hat, der über den Temperaturbereich von 0 °C bis 100 °C kleiner als 0.003 °C ist.

9. Sensorkabel nach einem der vorhergehenden Ansprüche, umfassend wenigstens eine weitere erste und oder zweite elektrische Verbindungseinrichtung (12, 52).

Fig .1.

Fig .2.

Fig .3.

Fig .4.

Fig . 5.